# EUROPÄISCHE PATENTANMELDUNG

(11) **EP 1 114 944 A2**
(43) Veröffentlichungstag der Anmeldung: **11.07.2001**
(21) Anmeldenummer: 00124685.9
(22) Anmeldetag: 11.11.2000
(51) Int. Cl.: F16D 3/60

(54) **Stahllamellenkupplung**

(30) Priorität: 07.01.2000 DE 20000282 U
(71) Anmelder: KTR KUPPLUNGSTECHNIK GMBH, D-48432 Rheine (DE)
(72) Erfinder: Partmann, Norbert, Dr.-Ing., 48527 Nordhorn (DE); Breith, Manfred, Ing., 48431 Rheine (DE); Wibbeling, Reinhard, Dipl.-Ing., 48477 Hörstel (DE); Banemann, Reiner, Dipl.-Ing., 48429 Rheine (DE); Tenfelde, Bernhard, Ing., 48480 Spelle (DE); Scherner, Helmut, Dipl.-Ing., 49477 Ibbenbüren (DE)
(74) Vertreter: Arendt, Helmut, Dipl.-Ing.

(57) **Zusammenfassung**

Um bei einer Stahllamellenkupplung große Verlagerungen der miteinander zu verbindenden Wellen bei engstem Bauraum ausgleichen zu können, ist vorgesehen, zwischen den Kupplungsflanschen wenigstens drei in Reihe angeordnete Lamellen oder beschichtete Lamellenpakete aus Federstahl anzuordnen, die über Zwischenscheiben miteinander zu einer Zwischeneinheit verbunden sind. Dadurch wird die Wirkung einer Verlagerung der zu verbindenden Maschinenteile gezielt auf die einzelnen Lamellen oder Lamellenpakete verteilt.

## Beschreibung

Die Erfindung betrifft eine Stahllamellenkupplung zum Ausgleich großer Verlagerungen von zu verbindenden Wellen oder Maschinenteilen, mit Kupplungsflanschen, an welchen die Stahllamellen befestigt sind.

Stahllamellenkupplungen ermöglichen eine spielfreie und drehsteife Drehmomentübertragung von Antriebsmaschinen, wie Elektromotoren, Turbinen und Hydraulikmotoren auf Arbeitsmaschinen, beispielsweise Baumaschinen, Generatoren, Förderanlagen, Pumpen, Verdichter, Walzwerke und dergleichen. Stahllamellenkupplungen sind wartungsfrei, sie haben eine hohe Temperaturbeständigkeit und sind unempfindlich gegen Verschmutzung. Außerdem verfügen sie über eine große axiale und winklige Flexibilität und ermöglichen so den Ausgleich von Winkel-, Radial- und Axialversatz der miteinander zu verbindenden Maschinenteile. Dabei müssen die Lamellen sowohl die bei den axialen Verlagerungen als auch bei den radialen Verlagerungen auftretenden Verformungen aufnehmen. Beide Verformungsarten führen zusätzlich zu der durch das Drehmoment verursachten Beanspruchung zu einer weiteren hohen Beanspruchung der Lamellen und reduzieren die erforderliche Lebensdauer der Kupplung. Bei Anwendungsfällen mit extremen axialen und radialen Verlagerungen ist die Verlagerungsfähigkeit bekannter Stahllamellenkupplungen nicht immer ausreichend. Eine bekannte Lösung mit Hilfe doppelkardanischer Kupplungen mit langen Zwischenstücken kann häufig aus Platzgründen nicht zum Einsatz kommen. Spezielle Bogenzahn®-Kupplungen sind nicht wartungsfrei und unterliegen naturgemäß einem höheren Verschleiß.

Der Erfindung liegt die Aufgabe zu Grunde, eine Kupplung der eingangs genannten Gattung zu schaffen, die in der Lage ist, auf engstem Bauraum große Verlagerungen aufzunehmen. Die Erfindung löst diese Aufgabe dadurch, daß zwischen den Kupplungsflanschen wenigstens drei in Reihe angeordnete Lamellen oder geschichtete Lamellenpakete aus Federstahl vorgesehen sind, die über Zwischenscheiben miteinander zu einem Federpaket verbunden sind.
Die Stahllamellen oder Stahllamellenpakete sind vorzugsweise ringförmig ausgebildet, wobei jede ringförmige Stahllamelle aus mehreren streifen- oder stabförmigen Lamellenlaschen zusammengefügt ist. In weiterer Ausbildung der Erfindung wird vorgeschlagen, jede Stahllamelle aus wenigstens vier gleich langen Lamellenlaschen zu bilden. Ferner ist es vorteilhaft, die Stahllamellen oder Stahllamellenpakete miteinander und mit den Zwischenscheiben wechselseitig zu verschrauben und das so gebildete, zwischen den Kupplungsflanschen anzuordnende Federpaket mit den Kupplungsflanschen durch Schrauben zu verbinden.
Ein weiterer Vorteil wird erreicht, wenn die einzelnen Lamellen oder Lamellenpakete unterschiedliche Dicken aufweisen. Hierbei können die äußeren Lamellen oder Lamellenpakete eines Federpakets steifer ausgeführt sein, als die innere oder zentrale Lamelle oder das innere Lamellenpaket.

Durch die Erfindung wird die Wirkung einer Verlagerung der zu verbindenden Maschinenteile gezielt auf die einzelnen Lamellen oder Lamellenpakete verteilt. Durch eine Variation der Dicke oder der Schichtung der einzelnen Lamellen wird eine gezielte Festlegung der Axialsteifigkeit erreicht. Es ist möglich, gezielt die äußeren Lamellen bzw. Lamellenpakete durch winklige Auslenkungen zu beanspruchen, wodurch nur diese die radialen Versatzkomponenten aufnehmen, während die mittlere oder zentrale Lamelle oder Lamellenpaket den axialen Ersatz ausgleichen. Dadurch wird die Einzelbelastung der Lamelle oder eines Lamellenpaketes reduziert. Es erhöhen sich die Verlagerungsfähigkeit und Lebensdauer dieser Elemente.

In der Zeichnung ist ein Ausführungsbeispiel der Erfindung schematisch dargestellt und nachstehend erläutert. Es zeigen:

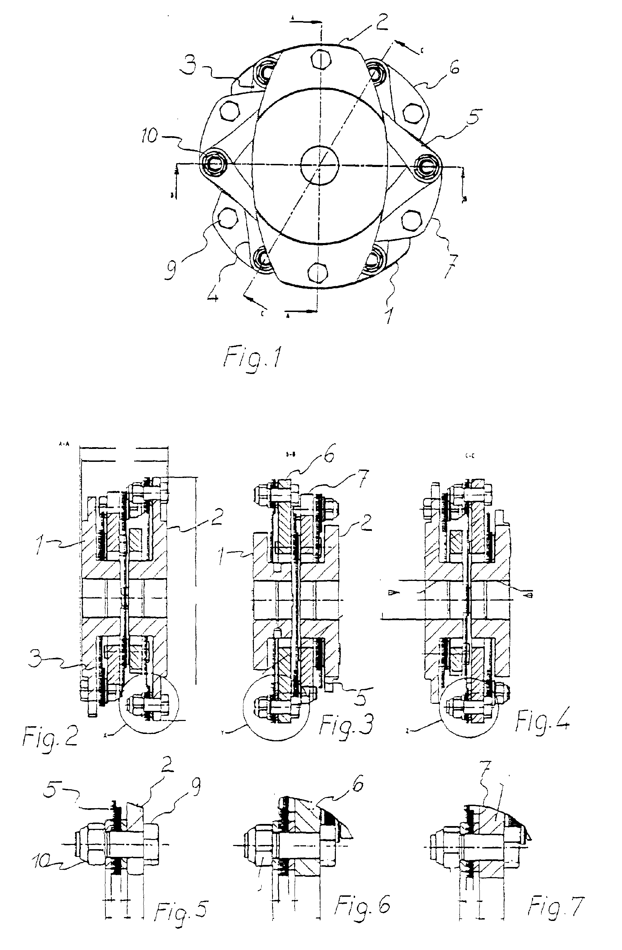

- Figur 1: die Stirnansicht einer Kupplung,
- Figur 2: den Schnitt A-A der Kupplung gemäß Figur 1,

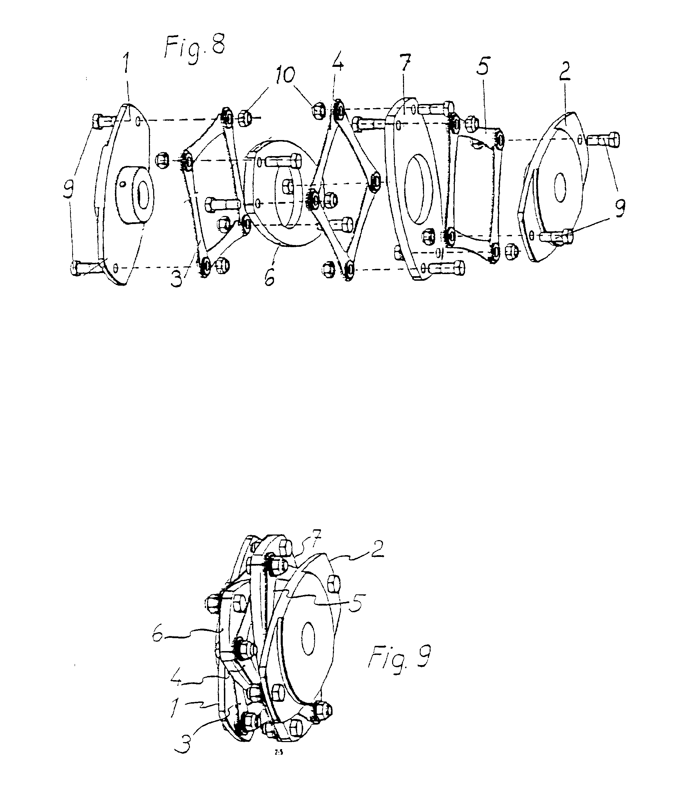

- Figur 3: den Schnitt B-B der Kupplung gemäß Figur 1,
- Figur 4: den Schnitt C-C der Kupplung gemäß Figur 1,
- Figur 5: eine vergrößerte Einzelheit des Kupplungsschnitts gemäß Figur 2,
- Figur 6: eine vergrößerte Einzelheit des Kupplungsschnitts gemäß Figur 3,
- Figur 7: eine vergrößerte Einzelheit des Kupplungsschnitts gemäß Figur 4,
- Figur 8: ein Explosionsschaubild der Kupplung und
- Figur 9: eine einsatzbereit montierte Kupplung in schaubildlicher Darstellung.

Die erfindungsgemäß gestaltete Kupplung besteht aus den beiden Nabenflanschen 1 und 2 für miteinander zu verbindende nicht dargestellte Maschinenwellen. Zwischen den Nabenflanschen befindet sich eine Zwischeneinheit, bestehend aus den Stahllamellen 3, 4 und 5, quadratischer Kontur, sowie den Zwischenscheiben 6 und 7. Die Stahllamellen sind aus einzelnen stabförmigen Lamellenlaschen gleicher Länge zusammengefügt und weisen an ihren Ecken Öffnungen 8 zum Durchführen von Verbindungsschrauben 9 auf. Durch Festziehen der Muttern 10 auf den Schrauben werden die Stahllamellen wechselseitig mit den Zwischenscheiben 6, 7 und mit den Kupplungsflanschen 1, 2 verbunden.

## Patentansprüche

1. Stahllamellenkupplung zum Ausgleich großer Verlagerungen von zu verbindenden Wellen oder Maschinenteilen, mit Kupplungsflanschen, an welchen die Stahllamellen befestigt sind, dadurch gekennzeichnet, daß zwischen den Kupplungsflanschen (1, 2) wenigstens drei in Reihe angeordnete Lamellen (3, 4, 5) oder geschichtete Lamellenpakete aus Federstahl vorgesehen sind, die über Zwischenscheiben (6, 7) miteinander zu einer Zwischeneinheit verbunden sind.

2. Kupplung nach Anspruch 1, dadurch gekennzeichnet, daß die einzelnen Lamellen oder Lamellenpakete verschiedene Dicken aufweisen.

3. Kupplung nach Anspruch 1 oder 2, dadurch gekennzeichnet, daß die äußeren Lamellen (3, 5) oder Lamellenpakete einer Zwischeneinheit steifer ausgeführt sind, als die innere Lamelle (4) oder das innere Lamellenpaket.

4. Kupplung nach einem der Ansprüche 1 bis 3, dadurch gekennzeichnet, daß die Stahllamellen oder Lamellenpakete ringförmig ausgebildet und jede ringförmige Stahllamelle (3, 4, 5) aus mehreren streifen- oder stabförmigen Lamellenlaschen zusammengefügt ist.

5. Kupplung nach einem der Ansprüche 1 bis 4, dadurch gekennzeichnet, daß die Stahllamellen oder Lamellenpakete miteinander und mit den Zwischenscheiben wechselseitig verschraubt, zwischen den Kupplungsflanschen angeordnet und mit diesen durch Schrauben (9, 10) verbunden sind.
